# EUROPÄISCHE PATENTSCHRIFT

(11) **EP 1 940 238 B1**
(45) Veröffentlichungstag und Bekanntmachung des Hinweises auf die Patenterteilung: **09.12.2009**
(21) Anmeldenummer: 06806504.4
(22) Anmeldetag: 24.10.2006
(51) Int. Cl.: A22B 5/00

(54) **VERFAHREN ZUR DURCHFÜHRUNG VON BEARBEITUNGSSCHRITTEN AN SCHLACHTTIEREN**
METHOD FOR CARRYING OUT TREATMENT STEPS ON ANIMALS FOR SLAUGHTER
PROCÉDÉ D'EXÉCUTION D'ETAFES DE TRAITEMENT D'ANIMAUX D'ABATTOIR

(30) Priorität: 24.10.2005 DE 102005051115
(43) Veröffentlichungstag der Anmeldung: 09.07.2008
(73) Patentinhaber: Banss Schlacht- und Fördertechnik GmbH, 35216 Biedenkopf (DE)
(72) Erfinder: SCHMIDT, Frank, 35232 Dautphetal (DE); STARK, Marek, 35083 Wetter (DE)
(74) Vertreter: Stoffregen, Hans-Herbert
(86) Internationale Anmeldenummer: PCT/EP2006/010242
(87) Internationale Veröffentlichungsnummer: WO 2007/048576

(56) Entgegenhaltungen:
- WO-A-01/67873
- WO-A-91/04670
- US-A- 4 847 954
- US-A- 5 205 779

## Beschreibung

Die Erfindung bezieht sich auf ein Verfahren zur Durchführung von Bearbeitungsschritten an in einer Schlachtstraße entlang einer Förderbahn hängend geforderte Schlachttieren durch optisches Messen des Schlachttiers, Digitalisieren entsprechender Messwerte und Zuführung dieser an eine Steuerung zumindest einer Handhabungseinrichtung, über die zumindest einer der Bearbeitungsschritte durchgeführt wird. Ein solches Verfahren ist aus z.B. WO-A-01/67873 bekannt.

Aus der DE.Z.: Fleischwirtschaft 8/2005, Seiten 25 - 28, Schmidt, F.: Roboter toppen Spezialmaschinen" ist ein gattungsgemäßes Verfahren bekannt. Dabei werden Schlachtschweine am Anfang einer Roboterlinie durch eine Messstation geführt, in der durch einen oder mehrere Laserscanner ein Oberprofil des Schlachttierkörpers digitalisiert wird. Mittels eines Roboters (Handhabungseinrichtung) können sodann auf der Basis der digitalisierten Werte Vorderpfoten abgekniffen, Rektum freigeschnitten, Schlossknochen getrennt und Bauch und Brustbein geöffnet werden. Während der einzelnen Bearbeitungsschritte wird das Schlachttier gefördert, so dass im kontinuierlichen Betrieb, d. h., das vom Roboter geführte Werkzeug fährt synchron zur Transportbewegung des Schlachtticrförderers mit, die Arbeiten an dem Schlachttier durchgeführt werden. Basis der Tätigkeiten sind die in der Messstation ermittelten Scanndaten, wobei ausschließlich die Bereiche gescannt werden, in denen eine Bearbeitung erfolgen soll.

Der US-B-6,623,348 sind ein Verfahren und eine Vorrichtung zum Schlachten und Bearbeiten von Tieren zu entnehmen. Um einen menschlichen Eingriff beim Schlachten und Bearbeiten zu minimieren, wird das Schlachttier oder ein Abschnitt von diesem mittels eines Sensors erfasst, um sodann von dem Sensor ermittelte Messwerte zu digitalisieren und einer Steuerung zuzuführen, von der eine Handhabungseinrichtung wie Roboter zum Durchführen der einzelnen Bearbeitungsschritte angesteuert wird.

Um die Bereiche des Schlachttieres zu identifizieren, in denen Bearbeitungsschritte durchgeführt werden sollen, wird den Messwerten ein Rasterbild überlagert. Für jeden Bearbeitungsschritt erfolgt ein gesondertes Erfassen des entsprechenden Bereichs, um die entsprechenden Messwerte einer Steuerung und damit einem Roboter zuzuführen. Dabei besteht die Möglichkeit, die Daten einzelner Bearbeitungsstationen einer Gesamtsteuerung zuzuführen. Auch die Verknüpfung über ein BUS-System ist möglich.

Eine Vorrichtung und ein Verfahren zum Entschwarten oder Trimmen eines Fleischstückes ist Gegenstand der DE-A-10 2004 017 037. Hierzu wird das beim Entschwarten oder Trimmen abzutrennende Teil in zwei oder drei Dimensionen mit Hilfe einer Kamera und einem Bildverarbeitungssystem und mit einem Abstandsmesssystem ermittelt, so dass punktuell Informationen über das Teil zur Verfügung stehen.

Da nur einzelne der durchzuführenden Arbeiten automatisch, also mittels des Roboters durchgeführt werden, müssen die verbleibenden Tätigkeiten von Hand vorgenommen werden. Hierdurch werden die mit der robotergestützten Schlachttechnik erzielten Vorteile zumindest teilweise verlassen, da die vom Schlachtpersonal durchgeführten Tätigkeiten grundsätzlich Quellen von Fehlern in sich bergen.

Der vorliegenden Erfindung liegt die Aufgabe zu Grunde, mit überaus hoher Genauigkeit Schlachttiere, die hängend gefördert werden, bearbeiten zu können, wobei im erforderlichen Umfang die Daten des Schlachttiers sowie die nach Einzelbearbeitungsschritten erfolgenden Änderungen am Schlachttier berücksichtigt werden können.

Zur Lösung der Aufgabe sieht die erfindungsgemäße Lehre im Wesentlichen folgende Verfahrensschritte vor:
- optisches Messen des Schlachttieres zur Gewinnung eines Oberflächenprofils (3D-Bild) und Digitalisieren entsprechender Messdaten (erste Daten),
- optisches Messen eines 2- oder 3-dimensionalen'Bereichs des Schlachttieres, in dem zumindest eine Bearbeitungstätigkeit durchzuführen ist, und Digitalisieren entsprechender Messdaten (zweite Daten), oder
- optisches Messen des zumindest einer Bearbeitungstätigkeit unterzogenen Schlachttieres zur Ermittlung eines weiteren Oberflächenprofils (3D-Bild) und Digitalisierung entsprechender Messdaten (dritte Daten), und
- Verknüpfen der ersten Daten und der zweiten oder der ersten Daten und der dritten Daten und Zuführen der verknüpften Daten an die Steuerung der zumindest einen und/oder einer weiteren Handhabungseinrichtung zur Durchführung von zumindest einer Bearbeitungstätigkeit.

Abweichend vom vorbekannten Stand der Technik werden nicht nur die Messdaten benutzt, die von dem Bereich ermittelt werden, in dem eine Bearbeitung erfolgen soll, sondern zum automatischen Bearbeiten werden zumindest zwei Sätze von digitalisierten Messdaten berücksichtigt, nämlich die Messdaten des Schlachttieres grundsätzlich vor dessen Bearbeitung in Form des 3D-Bildes, also nach Erstellung des vollständigen Oberflächenprofils des Schlachttierkörpers, und sodann ergänzend die digitalisierten Messdaten, die von Bereichen gewonnen werden, in denen die Arbeiten vorgenommen werden sollen. Dabei schließen die Bereiche auch erneut ein vollständiges Oberflächenprofil des Schlachttieres nach einem Bearbeitungsschritt mit ein. Hierdurch können insbesondere Tiefeninformationen des Schlachttieres gewonnen werden, wodurch die Bearbeitung mit höherer Genauigkeit und Präzision erfolgen kann.

Erfingdungsgemäß stehen folglich 3D-Informationen zur Verfügung, um einen optimalen Schlacht- und Bearbeitungsprozess durchführen zu können.

Dabei wird das Schlachttier insbesondere fotogrammetrisch gemessen, um folglich genaue Messbilder des Schlachttieres, seine räumliche Lage bzw. dreidimensionale Form zu erhalten. Hierzu werden Messkameras benutzt, die an einer Bildverarbeitung angeschlossen sind, um sodann digitalisierte Werte zur Verfügung zu stellen, die wiederum der Steuerung für die Handhabungseinrichtung zugeleitet werden.

Es besteht jedoch auch die Möglichkeit, in üblicher Weise das Schlachttier mit der erforderlichen Anzahl von Scannern zu scannen, um die benötigten Informationen und damit Daten zu erhalten.

Das Ursprungs-3D-Bild wird dabei insbesondere nach dem Entbluten des Schlachttiers und Entfernten des zum Entbluten benutzten Werkzeugs wie Hohlstichmessers ermittelt. Hierdurch wird jedoch die Erfindung nicht eingeschränkt, da dem Grunde nach zu jedem gewünschten Fortschritt des Schlachtens ein Ausgangs-3D-Bild als Basis für die weitere Bearbeitung von Daten und Ansteuerung der Handhabungseinrichtung (Roboter) gewonnen werden kann.

Unabhängig hiervon werden jedoch vor jeder der mit einer gesonderten Handhabungseinrichtung durchzuführenden Arbeiten zweite und/oder dritte Daten ermittelt, die sodann mit den ersten Daten verknüpft werden. Dabei kann auch ein Matchen zwischen den ersten und zweiten bzw. dritten Daten erfolgen, um eine räumliche Zuordnung des Teilbereichs zu dem Schlachttier insgesamt vorzunehmen, wodurch wiederum der Roboter mit dem von diesem betätigten Werkzeug positionsgenau eingesetzt werden kann.

Insbesondere ist erfindungsgemäß vorgesehen, dass der gesamte Schlachtprozess mittels Handhabungsvorrichtungen durchgeführt wird, wobei grundsätzlich jeder einzelne Bearbeitungsschritt von einer gesonderten Handhabungseinrichtung (Roboter) durchgeführt wird.

So kann auf der Basis der ersten Daten sowie zweiten Daten mittels einer ersten Handhabungseinrichtung ein Blutentzug des Schlachttieres erfolgen.

Auch besteht die Möglichkeit, auf der Basis der ersten Daten und nach dem Blutentzug ermittelter zweiter Daten ein für den Blutentzug eingestochenes Hohlstechmesser mittels einer weiteren Handhabungseinrichtung aus dem Schlachttier zu entfernen.

Auf der Basis der ersten Daten, die auch durch optisches wie fotogrammetrisches Messen des Schlachttiers nach dem Entbluten und Reinigen ermittelt sein können, sowie zweiten Daten können sodann Vorderpfoten, Augen und/oder Ohren mittels zumindest einer weiteren Handhabungseinrichtung entfernt werden, wobei zumindest das Entfernen der Vorderpfoten mit einer gesonderten Handhabungseinrichtung durchgeführt wird. Dabei kann die Handhabungseinrichtung ein Werkzeug führen, mit dem gleichzeitig beide Vorderpfoten z. B. eines Schweins positionsgenau abgetrennt werden.

Wird das Gesamtoberflächenprofil des Schlachttieres vorzugsweise durch fotogrammetrisches Messen ermittelt, so können die Messungen zur Ermittlung der weiteren Daten gleichfalls fotogrammetrisch durchgeführt werden. Es besteht aber auch die Möglichkeit, durch andere geeignete Messverfahren wie z. B. Scannen die Daten zu ermitteln.

Auf der Basis erster und zweiter Daten kann auch das Rektum des Schlachttiers mit einer gesonderten Handhabungseinrichtung entfernt werden. Erste und zweite Daten dienen auch dazu, mit einer weiteren Handhabungseinrichtung Schlossbein des Schlachttieres zu öffnen. Erste Daten und zweite und/oder dritte Daten dienen gleichfalls dazu, mit einer gesonderter Handhabungseinrichtung Bauchdecke des Schlachttiers zu öffnen und Brustbein zu durchtrennen. Sodann wird von dem geöffneten Schlachttier ein Oberflächenprofil gewonnen, um diese (zweiten und/oder dritten Daten) mit den ersten Daten zu verknüpfen um anschließend mit einer weiteren Handhabungseinrichtung Darmpaket und Innereien einschließlich Nieren und/oder Herz zu entnehmen.

In Ausgestaltung der Erfindung ist vorgesehen, dass die ersten Daten mit von dem ausgenommenen Schlachttier gewonnenen zweiten Daten verknüpft werden, um sodann auf deren Basis den Kopf des Schlachttieres abzukneifen und zü spalten. Dabei kann das Spalten vor dem Abkneifen oder umgekehrt erfolgen. Anschließend wird in einer weiteren Bearbeitungsstation der Rumpf durchtrennt. Somit erfolgen das Spalten des Kopfes und das Durchtrennen des Rumpfes mit verschiedenen Werkzeugen. Vorteil dieser Maßnahmen ist es, dass bei dem den Rumpf durchtrennenden Werkzeug höhere Standzeiten im Vergleich zu Bearbeitungen erfolgen können, bei denen Kopf und Rumpf mit ein und demselben Werkzeug getrennt werden.

Erste und zweite und/oder dritte Daten dienen auch dazu, Bauchfett und ggfs. Stichfleisch des Schlachttiers mit einer weiteren Handhabungseinrichtung zu entfernen, wobei die zweiten und/oder dritten Daten vom gespaltenen Schlachttier durch optisches Erfassen der Schlachttierhälften gewonnen werden.

Um das geschlachtete Tier zu markieren, wird ein Bereich gemessen, um in Abhängigkeit von der Oberflächenkontur eine ordnungsgemäße Markierung, insbesondere mit einem Tintenstrahldrucker, Laserprinter oder auch Brandstempel aufbringen zu können, der seinerseits von einem Arm eines Roboters bewegt wird.

Sind zuvor im Wesentlichen die nach dem Entbluten durchzuführenden Bearbeitungsschritte erläutert worden, bei denen ein Eingriff in das Schlachttier erfolgt, so ist die erfindungsgemäße Lehre auch im Zusammenhang mit dem Aufhängen des Schlachttiers bzw. Enthaaren einsetzbar.

Nach einer Weiterbildung der Erfindung ist vorgesehen, dass zum Anheben des Schlachttiers von einer liegenden Position in eine Hängeposition das Schlachttier in der liegenden Position optisch erfasst und unter Berücksichtigung der durch optisches Messen ermittelten und sodann digitalisierten Daten mittels einer weiteren Handhabungseinrichtung ein Hinterbein des Schlachttiers mit einer Schlinge umschlungen und das Schlachttier angehoben und in die Förderbahn eingehängt wird.

Ferner besteht die Möglichkeit, dass nach dem Enthaaren des Schlachttiers dieses abgelegt wird, das abgelegte Schlachttier gemessen und unter Berücksichtigung der digitalisierten Daten das Schlachttier mittels einer Handhabungseinrichtung an einen Haken bzw. einer Schlachtspreize befestigt wird, der bzw. die mittels der bzw. einer Handhabungseinrichtung in die Förderbahn eingehängt wird.

Aufgrund der erfindungsgemäßen Lehre werden insbesondere Tiefeninformationen des Schlachttiers durch dreidimensionales Messen dieses gewonnen, um aufgrund der hierdurch erzielten Scanndaten die Schlachtbearbeitungsschritte durchzuführen. Da ein vollständiges 3D-Bild des Schlachttiers gewonnen wird, ist eine problemlose Anpassung der Robotereinstellung auf die Größe des Schlachttieres möglich. Dabei können auch Daten mit abgelegten statistischen Daten oder Erfahrungswerten verknüpft werden, um z. B. die Schnitttiefe beim Öffnen der Bauchdecke des Schlachttiers festzulegen; denn es ist eine Abhängigkeit von der Größe des Schlachttiers gegeben, die durch das 3D-Bild (erste Daten) ermittelbar ist.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- **Fig. 1**: eine Prinzipdarstellung einer Schlachtstraße,
- **Fig. 2 - 6**: Bearbeitungsstationen in der Schlachtstraße,
- **Fig. 7**: eine Prinzipdarstellung des Verfahrensablaufs und
- **Fig. 8**: eine Prinzipdarstellung einer Meßanordnung.

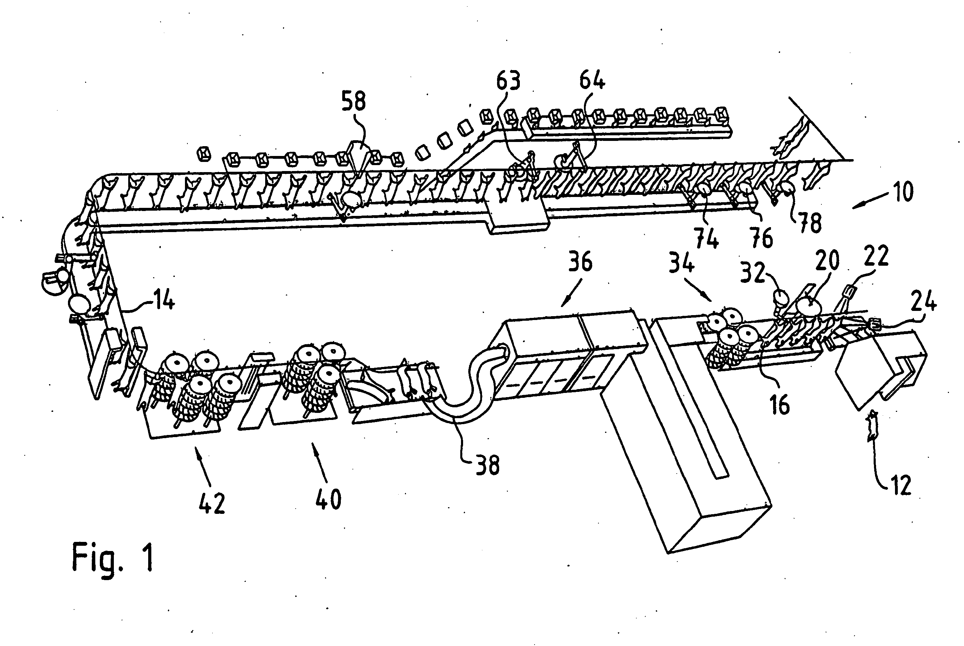

Anhand der Erläuterungen im Zusammenhang mit den Fig. 1 bis 7 wird die erfindungsgemäße Lehre zum Schlachten bzw. Bearbeiten von durch eine Schlachtstraße hängend geförderten Schlachttieren am Beispiel von digitalisierten Daten erläutert, die durch Scannen des Schlachttieres bzw. Bereichen von diesem ermittelt werden, ohne dass hierdurch eine Einschränkung der erfindungsgemäßen Lehre erfolgt. Vielmehr können die erforderlichen Daten auch z. B. durch fotogrammetrisches Messen gewonnen werden. Ein Einsatz anderer Sensoren, um benötigte 2- oder 3-dimensionale Informationen des Schlachttieres zu gewinnen, sind gleichfalls möglich. Insoweit ist auf hinlänglich bekannte Messmethoden und -verfahren zu verweisen.

In Fig. 1 ist rein prinzipiell ein Ausschnitt einer Schlachtstraße 10 dargestellt, in der Tiere 12 - im Ausführungsbeispiel Schweine - geschlachtet werden sollen. Die durch die Schlachtstraße 10 entlang einer Rohrbahn 14 geförderten Schlachttiere 16 werden durch die Schlachtstraße 10 an ihren Hinterpfoten aufgehängt gefördert.

Die einzelnen Bearbeitungsschritte erfolgen automatisch mittels Roboter. Um die Roboter ansteuern zu können, werden die Schlachttiere 16 im Ausführungsbeispiel gescannt, wobei zu Beginn ein vollständiges Oberflächenprofil des Schlachttiers 16, also ein 3D-Bild mittels Scanner aufgenommen wird. Bevorzugterweise wird dieses Bild vor der Blutentnahme mittels entsprechend angeordneter optischer Sensoren wie Laserscanner aufgenommen. Diese sind rein prinzipiell in der Fig. 1 mit den Bezugszeichen 22, 24 gekennzeichnet.

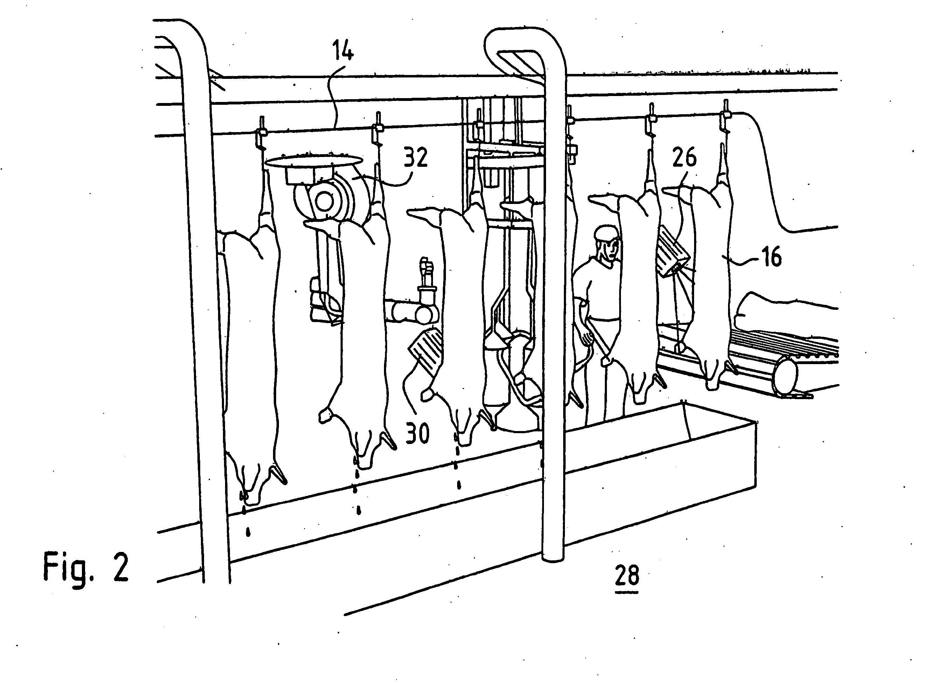

Wie sich aus der Fig. 2 ergibt, wird nach der Aufnahme des vollständigen Oberflächenprofils des Schlachttiers 16 mittels eines weiteren Scanners 26 der Bereich des Schlachttiers 16 gescannt, in dem der Blutentzug erfolgen soll, also das entsprechende Werkzeug wie Hohlstechmesser mittels eines Roboters eingestochen wird.

In einer nachfolgenden Bearbeitungsstation 28 erfolgt ebenfalls mittels eines Scanners 30 eine Aufnahme des Bereichs des Schlachttiers 16, in dem sich das Hohlstechmesser befindet, um dessen Position zu erfassen. Die Daten des mit dem Laserscanner 30 ermittelten Bereichs werden mit denen des Gesamtoberflächenprofils, also mit den über die Scanner 22, 24 ermittelten Scanndaten verknüpft, um daraufhin einen Roboter 32 anzusteuern, über den das Hohlstechmesser aus dem Schlachttier 16 herausgezogen wird.

Sodann wird das Schlachttier 16 in gewohnter Weise enthaart und gesäubert (Stationen 34, 36), um anschließend - im Ausführungsbeispiel über eine Rutsche 38 - auf einer Transportfläche abgelegt zu werden. Die Hinterpfoten werden mit einer Schlinge umschlungen, um das Schlachttier 16 über Haken bzw. eine Spreize auf die Rohrbahn 14 einhängen und transportieren zu können. Vor den weiteren Bearbeitungsschritten erfolgt sodann eine weitere Reinigung mittels Bürsten 40, 42, wie dies ebenfalls rein prinzipiell in Fig. 1 dargestellt ist.

Das Umschlingen der Hinterpfoten sowie das Einhängen des Schlachttiers auf die Rohrbahn 14 oder eine andere geeignete Transportbahn erfolgt vorzugsweise gleichfalls nach der erfindungsgemäßen Lehre, indem der entsprechende Bereich des Schlachttiers 16 optisch erfasst und die so gewonnenen Daten digitalisiert und einer in Fig. 1 nicht dargestellten Handhabungseinrichtung, also einem Roboter, zum Betätigen dieser zugeführt werden.

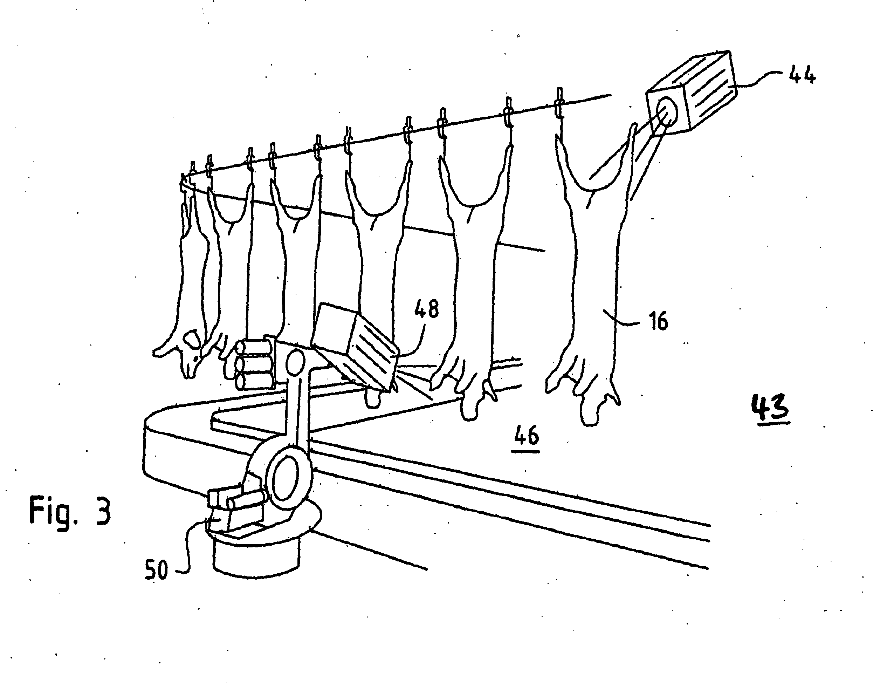

Anschließend erfolgen in gewohnter Weise weitere Bearbeitungen des Schlachttiers 16 wie Entfernung von Vorderpfoten, Augen, Ohren, wobei die entsprechenden Tätigkeiten ebenfalls mittels eines oder mehrerer Roboter durchgeführt werden. Entsprechende Bearbeitungsstationen sind den Fig. 3 bis 6 zu entnehmen. So wird in einer Station 43 der Rektumbereich des Schlachttiers 16 mittels eines Scanners 44 gescannt, um die als zweite Daten bezeichneten Daten mit den Daten, die dem vollständigen Oberflächenprofil (3D-Bild) entsprechen, zu verknüpfen. Sodann wird das Rekturn freigeschnitten. Durch das Verknüpfen der Daten des 3D-Bildes und des Rektumbereiches ist eine überaus präzise Lagebestimmung möglich, die es erlaubt, dass der in der Fig. 3 nicht dargestellte Roboter überaus präzise das Rektum freischneiden kann.

In einer Bearbeitungsstation 46 werden die Vorderpfotenbereiche des Schlachttiers 16 gescannt, um diese Daten mit denen des 3D-Bildes zu verknüpfen und sodann einen Roboter 48 anzusteuern, der die Vorderpfoten abschneidet. Dies kann bei Schweinen als Schlachttieren in einem Arbeitsgang erfolgen, indem die Vorderpfoten gleichzeitig von einem von dem Roboter 50 betätigten Werkzeug erfasst werden.

Zu den ersten Scanndaten, also den Daten, die grundsätzlich dem vollständigen Oberflächenprofil des Schlachttiers 16 entsprechen, ist anzumerken, dass dieses auch nach der Bearbeitungsstation 42 aufgenommen werden kann, also vor dem Entfernen von Vorderpfoten, Augen und/oder Ohren bzw. dem Freischneiden des Rekturns.

Erwähntermaßen können erste Daten dem Grunde nach zu jedem Zeitpunkt des Fortschritts der Bearbeitung des Schlachttiers als Basisdaten gewonnen werden, die sodann mit weiteren, den sogenannten zweiten oder dritten Scanndaten, verknüpft werden, um einen oder mehrere Roboter anzusteuern.

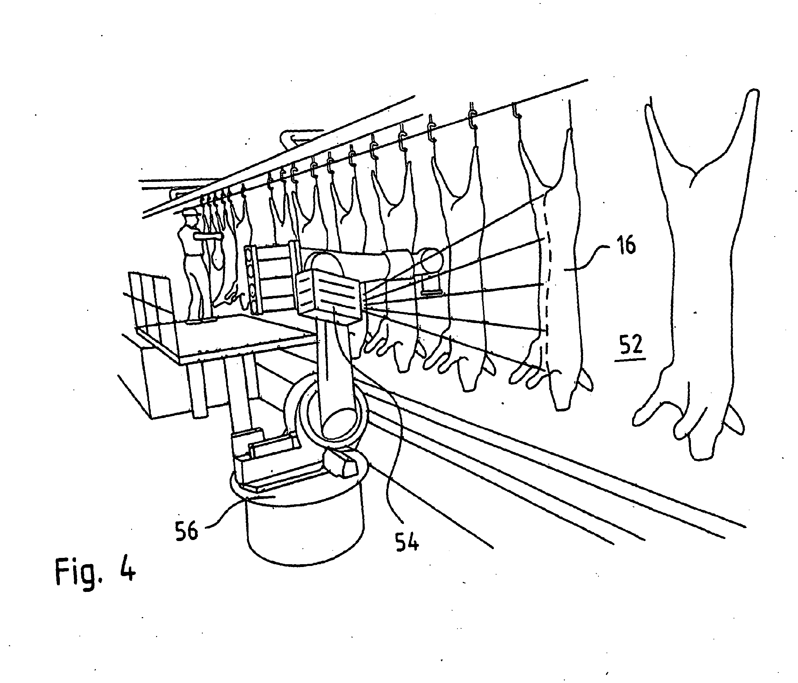

Der Fig. 4 ist eine Bearbeitungsstation 52 zu entnehmen, in der mittels eines Scanners 54 der gesamte Brustbereich des Schlachttiers 16 gescannt wird, um durch Verknüpfung dieser sogenannten zweiten Scanndaten und der dem vollständigen Oberflächenprofil des Schlachttiers 16 entsprechenden ersten Scanndaten einen Roboter 56 anzusteuern, über den die Bauchdecke des Schlachttiers geöffnet und das Brustbein durchtrennt wird. Zusätzlich können hierzu in einer Datenbank abgelegte Daten einbezogen werden, denen Erfahrungswerte zu Grunde liegen, die z. B. die Dicke der Bauchdecke in Abhängigkeit von der Größe des Schlachttiers berücksichtigen. Hierdurch ist sichergestellt, dass der Roboter 56 bzw. das von diesem betätigte Werkzeug die erforderliche optimale Schnitttiefe einhält.

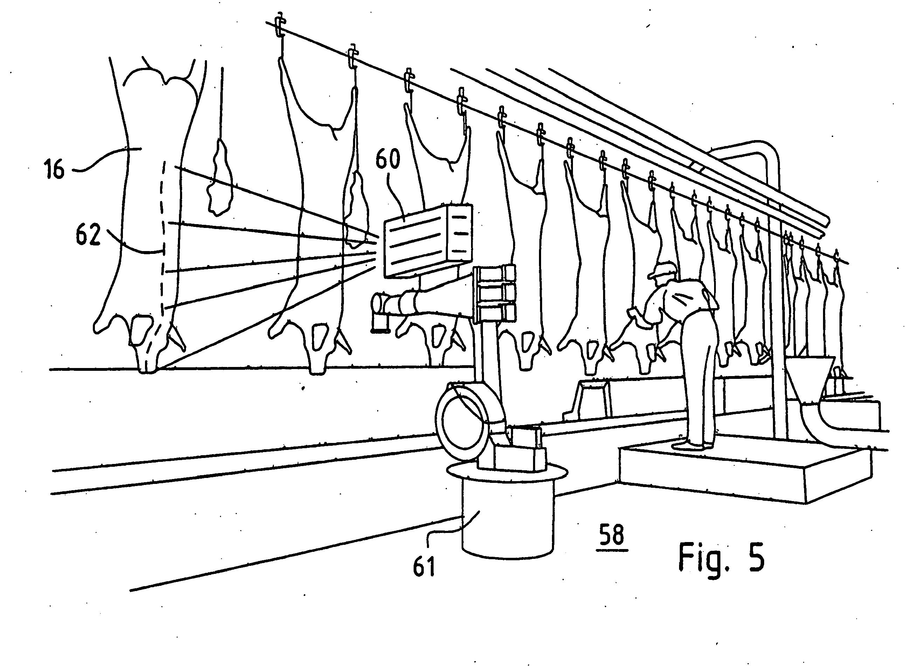

Fig. 5 zeigt eine Bearbeitungsstation 58, in der mittels eines Scanners 60 der Kopfbereich 62 des Schlachttiers 16 gescannt wird, um unter Zugrundelegung dieser zweiten Scanndaten und der ersten Scanndaten (vollständiges Oberflächenprofil; 3-D-Bild des Schlachttiers 16) den Kopf 62 des Schlachttiers mittels eines Roboters 61 abzukneifen und zu spalten. Spalten und Abkneifen können in der Reihenfolge auch vertauscht werden. In einer nachfolgenden Bearbeitungsstation 63 wird sodann der Rumpf gespalten, wobei ebenfalls erste und zweite bzw. dritte Scanndaten verknüpft werden, um auf der Basis entsprechender digitalisierter Werte einen Roboter zu steuern.

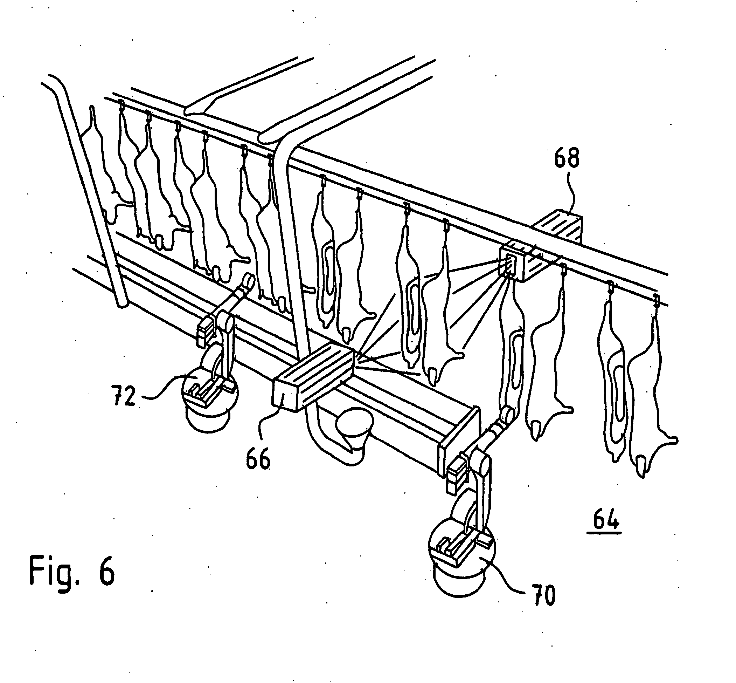

In der Fig. 6 wird in einer Bearbeitungsstation 64 nach dem Spalten des Schlachttiers 16 Flomen gezogen, also das Bauchfett des gespaltenen Schlachttiers 16 entfernt. Hierzu erfolgt eine weitere vollständige Aufnahme des Oberflächenprofils der Schlachttierhälften, um unter Berücksichtigung des vollständigen Oberflächenprofils vor Bearbeitung des Schlachttiers 16 Roboter 70, 72 anzusteuern, von denen jeweils ein Roboter 70 bzw. 72 jeweils eine Hälfte des gespaltenen Schlachttiers 16 bearbeitet, also das Bauchfett entfernt. Das Oberflächenprofil jeder Schlachttierkörperhälfte wird über Laserscanner 66, 68 gewonnen. Dabei können zweite Scanndaten (nur geöffneter Bereich der Schlachttierhälfte) oder dritte Scanndaten (vollständiger Oberflächenbereich der jeweiligen Schlachttierhälfte) verarbeitet werden.

Die zuvor erläuterten Bearbeitungsstationen ergeben sich prinzipiell auch aus der Fig. 1, wie die entsprechenden Bezugszeichen verdeutlichen.

Nach dem Entfernen des Bauchfetts erfolgt in einer Station 74 das Stempeln der Schlachttierhälften. Auch hierzu wird der entsprechende Bereich, auf den eine Markierung aufgebracht werden soll, gescannt. Die so gewonnenen sogenannten zweiten Scanndaten werden mit den ersten Scanndaten verknüpft, wodurch eine eindeutige Lage- und Oberflächenkonturbestimmung des Bereichs ermittelt wird. Sodann wird mittels eines Roboters bzw. eines von diesem geführten Druckers oder Stempels positionsgenau die Markierung aufgebracht. Anschließend kann in einer Station 74 eine Codierung gemäß beschriebener Verfahrensweise durch Verknüpfen, von Scanndaten und Ansteuern eines Roboters aufgebracht werden. In einer Station 78 kann ein sogenannte Nachputzen der Schlachttierhälften erfolgen, sofern dies auch aufgrund der Scanndaten erforderlich erscheint.

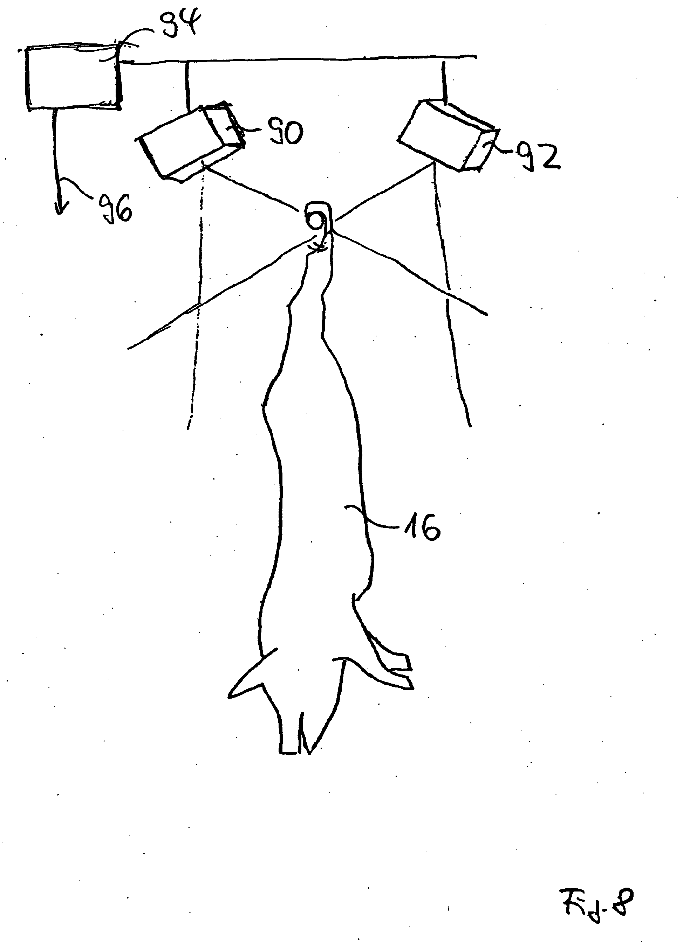

Anhand der Fig. 8 soll rein prinzipiell erläutert werden, dass die erforderlichen Messdaten und aus diesen die benötigten digitalisierten Daten nicht nur durch Scannen von Schlachttieren 16, sondern auch durch fotogrammetrisches Messen dieser gewonnen werden kann, um ein vollständiges Oberflächenprofil einschließlich Position des Schlachttieres 16 in Bezug auf einen Roboter zu erhalten, mittels der das Schlachttier 16 bearbeitet wird. So sind in Fig. 8 rein prinzipiell zwei Kameras 90, 92 dargestellt, mittels der ein 3D-Bild des Schlachttieres 16 und dessen Lage erhalten wird. Hierzu sind Kameras 90, 92 vorgesehen. Sind in der Zeichnung zwei Kameras 90, 92 dargestellt, so kann entsprechend der Anforderungen auch eine größere Anzahl von Kameras zum Einsatz gelangen. Die Kameras 90, 92 sind mit einer Auswerteeinheit 94 verbunden, über die digitalisierte Daten einer Handhabungseinrichtung (Pfeil 96) zugeführt werden, über die wiederum das Schlachttier 16 in gewünschtem Umfang bearbeitet wird. Wird das fotogrammetrische Verfahren zur Ermittlung des 3D-Bildes des Schlachttieres benutzt, so kann dieses ebenfalls in den einzelnen Bearbeitungsstationen zum Einsatz gelangen. Alternativ und ergänzend kann auch ein Scannen von Bereichen erfolgen, in denen das Schlachttier 16 bearbeitet werden soll. Selbstverständlich besteht auch die Möglichkeit, das 3D-Bild durch Scannen zu erhalten.

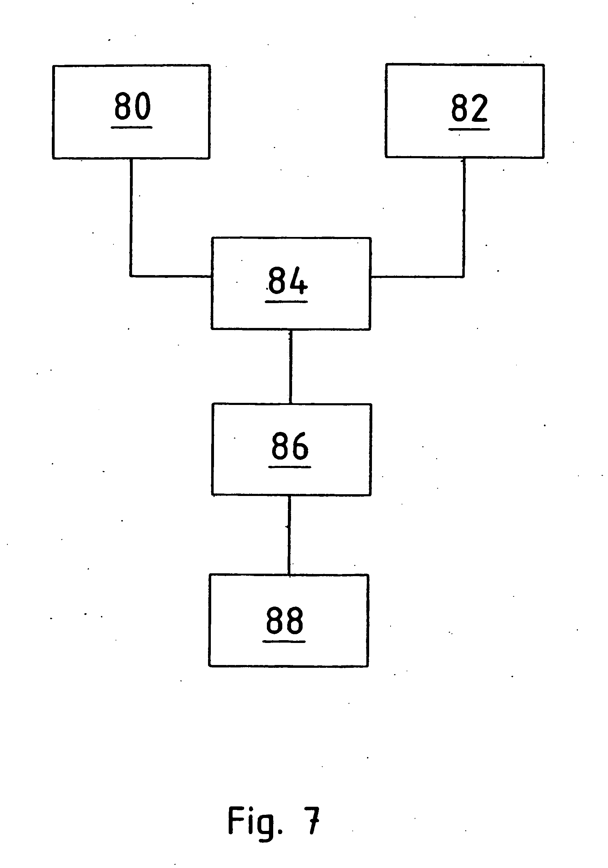

Anhand der Fig. 7 soll das erfindungsgemäße Verfahren noch einmal prinzipiell erläutert werden. So werden erste Daten 80, die dem vollständigen Oberflächenprofil (3D-Bild) eines Schlachttier grundsätzlich vor Durchführung von Bearbeitungsschritten entsprechen, mit sogenannten zweiten oder dritten Daten 82 in einem Rechner 84 aufgearbeitet und verknüpft, um sodann über eine Steuerung 86 eine Handhabungseinrichtung (Roboter 88) anzusteuern. Durch einen Vergleich bzw. ein Matchen der einzelnen Daten erfolgt eine überaus präzise Ansteuerung des Roboters 88 und somit eine hochgenaue Bearbeitung des Schlachttiers, dessen jeweilige Größe und Anatomie in den einzelnen Bearbeitungsstationen aufgrund der Verknüpfung bzw. des Matchens der Daten berücksichtigt werden. Das Matchen ermöglicht dabei insbesondere die Lagebestimmung des zu bearbeitenden Bereichs des Schlachttiers in Bezug auf den Roboter 88, da dessen Position bei der Ermittlung des 3D-Datensatzes in Bezug auf den Roboter bekannt ist.

## Patentansprüche

1. Verfahren zur Durchführung von Bearbeitungsschritten an in einer Schlachtstraße entlang einer Förderbahn hängend geförderten Schlachttieren durch optisches Messen des Schlachttiers, Digitalisieren entsprechender Messwerte und Zuführung dieser an eine Steuerung zumindest einer Handhabungseinrichtung, über die zumindest einer der Bearbeitungsschritte durchgerührt wird,
**gekennzeichnet durch**
- optisches Messen des Schlachttieres zur Gewinnung eines Oberflächenprofils, 3D-Bild, und Digitalisieren entsprechender Messdaten, erste Daten,
- optisches Messen eines 2- oder 3-dimensionalen Bereichs des Schlachttieres, in dem zumindest eine Bearbeitungstätigkeit durchzuführen ist, und Digitalisieren entsprechender Messdaten, zweite Daten, oder
- optisches Messen des zumindest einer Bearbeitungstätigkeit unterzogenen Schlachttieres zur Ermittlung eines weiteren Oberflächenprofils, 3D-Bild, und Digitalisierung entsprechender Messdaten, dritte Daten, und
- Verknüpfen der ersten Daten und der zweiten oder der ersten Daten und der dritten Daten und Zuführen der verknüpften Daten an die Steuerung der zumindest einen und/oder einer weiteren Handhabungseinrichtung zur Durchführung von zumindest einer Bearbeitungstätigkeit.

2. Verfahren nach Anspruch 1,
**dadurch gekennzeichnet,**
**dass** vor jeder mit einer gesonderten Handhabungseinrichtung durchzuführenden Arbeit zweite und/oder dritte Daten ermittelt werden.

3. Verfahren nach Anspruch 1,
**dadurch gekennzeichnet,**
**dass** auf der Basis der ersten Daten sowie zweiter Daten mittels einer ersten Handhabungseinrichtung ein Blutentzug des Schlachttiers erfolgt.

4. Verfahren nach Anspruch 1 oder 3,
**dadurch gekennzeichnet,**
**dass** auf der Basis der ersten Daten und nach dem Blutentzug ermittelter zweiter Daten ein für den Blutentzug eingestochenes Werkzeug wie Hohlstechmesser mittels einer weiteren Handhabungseinrichtung aus dem Schlachttier entfernt wird.

5. Verfahren nach zumindest einem der vorhergehenden Ansprüche,
**dadurch gekenntzeichnet,**
dass auf der Basis der ersten Daten sowie zweiter Daten Vorderpfoten, Augen und/oder Ohren mittels zumindest einer weiteren Handhabungseinrichtung entfernt werden.

6. Verfahren nach Anspruch 5,
**dadurch gekennzeichnet,**
**dass** zumindest das Entfernen der Vorderpfoten mit einer gesonderten Handhabungseinrichtung durchgeführt wird.

7. Verfahren nach zumindest einem der vorhergehenden Ansprüche,
**dadurch gekennzeichnet,**
**dass** auf der Basis der ersten Daten sowie zweiter Daten Rektum des Schlachttiers mit einer weiteren Handhabungseinrichtung entfernt wird.

8. Verfahren nach zumindest einem der vorhergehenden Ansprüche,
**dadurch gekennzeichnet,**
**dass** auf der Basis der ersten Daten sowie zweiter Daten mit einer weiteren Handhabungseinrichtung das Schlossbein des Schlachttiers geöffnet wird.

9. Verfahren nach zumindest einem der vorhergehenden Ansprüche,
**dadurch gekennzeichnet,**
**dass** auf der Basis der ersten Daten sowie zweiter und/oder dritter Daten mit einer weiteren Handhabungseinrichtung die Bauchdecke des Schlachttiers geöffnet und das Brustbein durchtrennt wird.

10. Verfahren nach Anspruch 9,
**dadurch gekennzeichnet,**
**dass** die ersten Daten mit zweiten und/oder dritten Daten von dem geöffneten Schlachttier der Steuerung einer weiteren Handhabungseinrichtung zum Entfernen des Darmpakets und/oder der Innereien und/oder der Nieren und/oder des Herzs zugeführt werden.

11. Verfahren nach zumindest einem der vorhergehenden Ansprüche,
**dadurch gekennzeichnet,**
**dass** die ersten Daten mit von dem ausgenommenen Schlachttier gewonnenen zweiten und/oder dritten Daten verknüpft werden und auf der Basis dieser Daten der Kopf des Schlachttiers, abgekniffen und durchtrennt wird.

12. Verfahren nach Anspruch 11,
**dadurch gekennzeichnet,**
**dass** nach dem Durchtrenne, bzw. Spalten des Kopfes der Rumpf des Schlachttieres auf der Basis der ersten und zweiten bzw. dritten Daten durchtrennt wird.

13. Verfahren nach zumindest Anspruch 12,
**dadurch gekennzeichnet,**
**dass** die ersten Daten mit zweiten und/oder dritten Daten des gespaltenen Schlachttiers, bzw. der Schlachttierhälfte verknüpft werden und auf der Basis dieser Daten Bauchfett und gegebenenfalls Stichfleisch des Schlachttiers mit einer weiteren Handhabungseinrichtung entfernt werden.

14. Verfahren nach zumindest einem der vorhergehenden Ansprüche,
**dadurch gekennzeichnet,**
**dass** auf der Basis der zweiten Daten auf das Schlachttier eine Markierung wie ein Stempel aufgebracht wird.

15. Verfahren nach Anspruch 14,
**dadurch gekennzeichnet,**
**dass** die Markierung mittels eines Tintenstrahldruckers, Laserdrucker oder eines Brandstempels aufgebracht wird.

16. Verfahren nach zumindest einem der vorhergehenden Ansprüche,
**dadurch gekennzeichnet,**
**dass** zum Anheben des Schlachttiers von einer liegenden Position in eine hängende das Schlachttier in der liegenden Position optisch erfasst und unter Berücksichtigung entsprechender digitalisierter Daten mittels einer weiteren Handhabungseinrichtung ein Hinterbein des Schlachttiers mit einer Schlinge umschlungen und das Schlachttier angehoben und in die Förderbahn eingehängt wird.

17. Verfahren nach zumindest einem der vorhergehenden Ansprüche,
**dadurch gekennzeichnet,**
**dass** nach Enthaaren des Schlachttiers dieses abgelegt wird, das abgelegte Schlachttier optisch erfasst und unter Berücksichtigung entsprechender digitalisierter Daten das Schlachttier mittels einer Handhabungseinrichtung an einen Haken bzw. einer Schlachtspreize befestigt wird, der bzw. die mittels der bzw. einer Handhabungseinrichtung in die Förderbahn eingehängt wird.

18. Verfahren nach zumindest einem der vorhergehenden Ansprüche,
**dadurch gekennzeichnet,**
**dass** das optische Messen mittel eines oder mehrerer Scanner durchgeführt wird.

19. Verfahren nach zumindest einem der vorhergehenden Ansprüche,
**dadurch gekennzeichnet,**
**dass** zumindest die ersten Daten mittels zumindest zwei Kameras ermittelt werden, die mit einer Bildverarbeitungseinrichtung verbunden sind.

20. Verfahren nach zumindest einem der vorhergehenden Ansprüche,
**dadurch gekennzeichnet,**
**dass** das optische Messen fotogrammetrisch durchgeführt wird.

## Claims

1. Method for performing processing steps on slaughtered animals conveyed hanging head-down in a slaughter line along a conveyor by optical measurement of the slaughtered animal, digitizing of the corresponding measured values and transmission thereof to a control unit of at least one handling device using which at least one of the processing steps is performed,
**characterized by**
- optical measurement of the slaughtered animal for obtaining a surface profile, 3-D image, and digitizing of corresponding measurement data, first data,
- optical measurement of a 2-dimensional or 3-dimensional area of the slaughtered animal in which at least one processing activity is to be performed, and digitizing of corresponding measurement data, second data, or
- optical measurement of the slaughtered animal subjected to at least one processing activity in order to obtain a further surface profile, 3-D image, and digitizing of corresponding measurement data, third data, and
- linking of the first data and the second data, or of the first data and the third data, and transmission of the linked data to the control unit of the at least one handling device and/or of a further handling device for performing of at least one processing activity.

2. Method according to Claim 1,
**wherein**
before every operation to be performed with a separate handling device second and/or third data are ascertained.

3. Method according to Claim 1,
**wherein**
on the basis of the first data and of the second data the blood is drained from the slaughtered animal using a first handling device.

4. Method according to Claim 1 or 3,
**wherein**
on the basis of the first data and of second data ascertained after the blood has been drained, a tool fluted for draining blood, such as a hollow plunger knife, is removed from the slaughtered animal using a further handling device.

5. Method according to at least one of the preceding claims,
**wherein**
on the basis of the first data and of second data the fore feet, eyes and/or ears are removed by at least one further handling device.

6. Method according to Claim 6,
**wherein**
at least the removal of the fore feet is performed with a separate handling device.

7. Method according to at least one of the preceding claims,
**wherein**
on the basis of the first data and of second data the rectum of the slaughtered animal is removed by a further handling device.

8. Method according to at least one of the preceding claims,
**wherein**
on the basis of the first data and of second data the pelvic bone of the slaughtered animal is cut open with a further handling device.

9. Method according to at least one of the preceding claims,
**wherein**
on the basis of the first data and of second and/or third data the abdominal wall of the slaughtered animal is cut open and the sternum is cut through by a further handling device.

10. Method according to Claim 9,
**wherein**
the first data with second and/or third data of the cut-open slaughtered animal are transmitted to the control unit of a further handling device for removal of the viscera and/or the entrails and/or the kidneys and/or the heart.

11. Method according to at least one of the preceding claims,
**wherein**
the first data are linked with second and/or third data obtained from the eviscerated slaughtered animal and on the basis of this data the head of the slaughtered animal is pinched off and cut through.

12. Method according to Claim 11,
**wherein**
after cutting through or splitting of the head the torso of the slaughtered animal is cut through on the basis of the first and second or third data.

13. Method according to at least Claim 12,
**wherein**
the first data are linked with second and/or third data of the split slaughtered animal or slaughtered animal half, and on the basis of these data the stomach fat and if necessary the meat around the bleeding-out area of the slaughtered animal are removed by a further handling device.

14. Method according to at least one of the preceding claims,
**wherein**
on the basis of the second data a marking such as a stamp is made on the slaughtered animal.

15. Method according to Claim 14,
**wherein**
the marking is made by an inkjet printer, laser printer or branding iron.

16. Method according to at least one of the preceding claims,
**wherein**
for lifting of the slaughtered animal from a supine position to a suspended position the slaughtered animal is optically scanned in the supine position and, with account being taken of corresponding digitized data, a hind leg of the slaughtered animal is surrounded with a loop by a further handling device and the slaughtered animal is lifted and suspended in the conveyor track.

17. Method according to at least one of the preceding claims,
**wherein**
after removal of the hair from the slaughtered animal the latter is set down and optically scanned and, with account being taken of corresponding digitized data, the slaughtered animal is attached by a handling device to a hook or a carcass spreader that is suspended by this or another handling device in the conveyor track.

18. Method according to at least one of the preceding claims,
**wherein**
optical measuring is performed by one or more scanners.

19. Method according to at least one of the preceding claims,
**wherein**
at least the first data are ascertained by at least two cameras connected to an image processing device.

20. Method according to at least one of the preceding claims,
**wherein**
optical measuring is performed photogrammetrically.

## Revendications

1. Procédé de réalisation d'étapes d'usinage sur un animal de boucherie transporté de manière suspendue le long d'une voie de transport dans une section d'abattoir, par mesure optique de l'animal de boucherie, numérisation des valeurs mesurées et transmission de ces dernières à une commande d'au moins un dispositif de manipulation, par l'intermédiaire duquel au moins une des étapes d'usinage est réalisée,
**caractérisé par**
- la mesure optique de l'animal de boucherie pour l'obtention d'un profil de surface, sous forme d'image en 3D, et la numérisation des données de mesure obtenues, dites premières données,
- la mesure optique d'une partie en 2 ou 3 dimensions de l'animal de boucherie, dans laquelle au moins une activité d'usinage doit être réalisée, et la numérisation des données de mesure obtenues, dites deuxièmes données, ou
- la mesure optique de l'animal de boucherie soumis à au moins une activité d'usinage pour la détermination d'un autre profil de surface, sous forme d'image en 3D, et la numérisation des données de mesure correspondantes, dites troisièmes données, et
- la liaison des premières et deuxièmes données ou des premières et troisièmes données et la transmission des données reliées à la commande du dispositif de manipulation au moins en présence et/ou d'un autre dispositif de commande pour la réalisation d'au moins une activité d'usinage.

2. Procédé selon la revendication 1,
**caractérisé en ce**
**que** les deuxièmes et/ou troisièmes données sont déterminées avant tout travail à réaliser avec un dispositif de manipulation à part.

3. Procédé selon la revendication 1,
**caractérisé en ce**
**qu'**une saignée de l'animal de boucherie est réalisée sur la base des premières ainsi que des deuxièmes données au moyen d'un premier dispositif de manipulation.

4. Procédé selon la revendication 1 ou 3,
**caractérisé en ce**
**que**, sur la base des premières données et des deuxièmes données déterminées après la saignée, un outil, tel qu'un couteau à lame creuse, planté pour la saignée, est retiré de l'animal de boucherie au moyen d'un autre dispositif de manipulation.

5. Procédé selon au moins l'une des revendications précédentes,
**caractérisé en ce**
**que**, sur la base des premières ainsi que des deuxièmes données, les pattes avant, les yeux et/ou les oreilles sont enlevés à l'aide d'au moins un autre dispositif de manipulation.

6. Procédé selon la revendication 5,
**caractérisé en ce**
**qu'**au moins les pattes avant sont enlevées à l'aide d'un dispositif de manipulation à part.

7. Procédé selon au moins l'une des revendications précédentes,
**caractérisé en ce**
**que**, sur la base des premières ainsi que des deuxièmes données, le rectum de l'animal de boucherie est enlevé à l'aide d'un autre dispositif de manipulation.

8. Procédé selon au moins l'une des revendications précédentes,
**caractérisé en ce**
**que**, sur la base des premières ainsi que des deuxièmes données, l'os du bassin de l'animal de boucherie est ouvert à l'aide d'un autre dispositif de manipulation.

9. Procédé selon au moins l'une des revendications précédentes,
**caractérisé en ce**
**que**, sur la base des premières ainsi que des deuxièmes et/ou troisièmes données et à l'aide d'un autre dispositif de manipulation, la paroi abdominale de l'animal de boucherie est ouverte et le sternum séparé.

10. Procédé selon la revendication 9,
**caractérisé en ce**
**que** les premières données et les deuxièmes et/ou troisièmes données de l'animal de boucherie ouvert sont transmises à la commande d'un autre dispositif de manipulation pour le retrait des intestins et/ou des organes internes et/ou des rognons et/ou du coeur.

11. Procédé selon au moins l'une des revendications précédentes,
**caractérisé en ce**
**que** les premières données sont reliées aux deuxièmes et/ou troisièmes données obtenues à partir de l'animal vidé et que, sur la base de ces données, la tête de l'animal de boucherie est sectionnée et séparée.

12. Procédé selon la revendication 11,
**caractérisé en ce**
**que**, après la section ou la séparation de la tête, le corps de l'animal de boucherie est séparé sur la base des premières et deuxièmes ou troisièmes données.

13. Procédé selon au moins la revendication 12,
**caractérisé en ce**
**que** les premières données sont reliées aux deuxièmes ou troisièmes données de l'animal de boucherie découpé ou de la moitié de l'animal de boucherie, et que, sur la base de ces données, la panne et le cas échéant la hampe de l'animal de boucherie sont retirées à l'aide d'un autre dispositif de manipulation.

14. Procédé selon au moins l'une des revendications précédentes,
**caractérisé en ce**
**que**, sur la base des deuxièmes données, une marque telle qu'un tampon est appliquée sur l'animal de boucherie.

15. Procédé selon la revendication 14,
**caractérisé en ce**
**que** la marque est appliquée à l'aide d'une imprimante à jet d'encre, d'une imprimante laser ou d'une marque au fer chaud.

16. Procédé selon au moins l'une des revendications précédentes,
**caractérisé en ce**
**que**, pour soulever l'animal de boucherie d'une position allongée à une position suspendue, l'animal de boucherie est saisie optiquement en position allongée et que, en fonction des données numérisées correspondantes et à l'aide d'un autre dispositif de manipulation, le pied arrière est entouré par un collet et l'animal de boucherie soulevé puis pendu dans la voie de transport.

17. Procédé selon au moins l'une des revendications précédentes,
**caractérisé en ce**
**que**, après épilation de l'animal de boucherie, celui-ci est déposé, que l'animal de boucherie ainsi déposé est saisi optiquement et que, en fonction des données numérisées correspondantes et à l'aide d'un dispositif de manipulation, l'animal de boucherie est fixé à un crochet ou à un système d'écartement d'animal de boucherie qui est suspendu à la voie de transport à l'aide du ou d'un dispositif de manipulation.

18. Procédé selon au moins l'une des revendications précédentes,
**caractérisé en ce**
**que** la mesure optique est réalisée à l'aide d'un ou plusieurs scanners.

19. Procédé selon au moins l'une des revendications précédentes,
**caractérisé en ce**
**qu'**au moins les premières données sont déterminées à l'aide d'au moins deux caméras qui sont reliées à un dispositif de traitement d'image.

20. Procédé selon au moins l'une des revendications précédentes,
**caractérisé en ce**
**que** la mesure optique est réalisée de manière photogrammétrique.
